Europäisches Patentamt

European Patent Office

Office européen des brevets

(11) Veröffentlichungsnummer: **0 318 112**
**A2**

(12) # EUROPÄISCHE PATENTANMELDUNG

(21) Anmeldenummer: 88202654.5

(22) Anmeldetag: 24.11.88

(51) Int. Cl.⁴: **C03B 37/012 , C03B 23/04**

(30) Priorität: 25.11.87 DE 3739906

(43) Veröffentlichungstag der Anmeldung:
**31.05.89 Patentblatt 89/22**

(84) Benannte Vertragsstaaten:
**DE FR GB SE**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB SE**

(72) Erfinder: **Clasen, Rolf, Dr. Dipl.-Phys.**
**Schlossparkstrasse 36**
**D-5100 Aachen(DE)**
Erfinder: **Schlageter, Klaus**
**Eckenbergerstrasse 7**
**D-5100 Aachen(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) **Vorrichtung aus Quarzglas.**

(57) Vorrichtung aus Quarzglas zur Aufnahme oder zum Halten von in einem Ofen zu erhitzenden Werkstücken, wobei ein in die heiße Ofenzone hineinragender Bereich der Vorrichtung eine Aufwölbung mit einem Krümmungsbeginn und einem Krümmungsende aufweist, die von einem mit einer Immersionsflüssigkeit gefüllten Gefäß umschlossen ist, wobei im Material der Vorrichtung in einem vor der Aufwölbung liegenden Bereich infolge Totalreflexion geführte Wärmestrahlung aus der Aufwölbung ausgekoppelt und in die Immersionsflüssigkeit eingekoppelt wird und ein an die Aufwölbung anschließender Bereich der Vorrichtung mit an ihm befindlichen weiteren Vorrichtungsteilen kälter als der vor der Aufwölbung liegende Bereich ist.

FIG.1

## Vorrichtung aus Quarzglas

Die Erfindung betrifft eine Vorrichtung aus Quarzglas zur Aufnahme oder zum Halten von in einem Ofen zu erhitzenden Werkstücken.

Bei Verfahren zur Reinigung und zur Sinterung von keramischen Grünkörpern, wie sie z.B. für die Herstellung von hochreinen Quarzgläsern, die beispielsweise als Substratrohre zur Herstellung von optischen Wellenleitern oder als Kolbenglas für die Herstellung von Halogen- oder Gasentladungslampen benötigt werden oder aber zur Reinigung und zur Sinterung von keramischen Grünkörpern, wie sie z.B. für die Herstellung von elektronischen Bauelementen benötigt werden, werden für die Erhitzungsprozesse während der Reinigung und während des Sinterns der Grünkörper Vorrichtungsteile in Form von Arbeitsrohren, in denen der zu reinigende Grünkörper angeordnet ist und die von Reinigungsgas durchströmt werden oder in Form von Halterungsstäben, an denen der gereinigte zu sinternde Grünkörper befestigt ist, eingesetzt.

Ein Reinigungs- und Sinterverfahren für derartige Grünkörper wird zum Beispiel vorgeschlagen mit der deutschen Patentanmeldung P 36 19 510.3.

Derartige Vorrichtungen bestehen vorteilhafterweise aus Quarzglas. Diese Vorrichtungen werden in einen elektrisch beheizten Ofen eingesetzt und finden Verwendung bei Temperaturen mindestens bis zu 1500 °C.

Bei Reinigungstemperaturen oberhalb von 800 °C wird ein stark zunehmender Anteil der Ofenwärme durch Strahlung an die Ofenenden transportiert. Bei Verwendung von Quarzglas für die genannten Vorrichtungen wird ein großer Teil dieser Wärmestrahlung aufgrund der guten Transmissionseigenschaften von Quarzglas innerhalb des Quarzglases durch vielfache Totalreflexion geleitet, wo die Strahlung an senkrechten Schnittflächen wieder austreten kann. Hieraus ergibt sich das Problem, daß mit den Vorrichtungen aus Quarzglas verbundene weitere Vorrichtungsteile wie Dichtungsringe aus z.B. natürlichem oder synthetischem Kautschuk oder metallische Befestigungsteile stark erwärmt werden. Diese Erwärmung durch Strahlung läßt sich nicht durch Kühlung von außen, z.B. mittels Luft oder Wasser, verringern. Durch die großen Unterschiede des Brechungsindex zwischen Quarzglas und Luft wird die einmal in der heißen Ofenzone in einen Vorrichtungsteil aus Quarzglas eingekoppelte Strahlung ebenso gut wie Strahlung in z.B. einem Lichtwellenleiter geführt und diese Strahlung tritt auch an Biegungen nicht aus.

Der Erfindung liegt die Aufgabe zugrunde, in einem heißen Ofen befindliche Vorrichtungsteile aus Quarzglas, wie Arbeitsrohre oder Halterungsstäbe, so auszubilden, daß sie an dem Ende, an dem weitere Vorrichtungsteile wie Dichtungselemente oder Befestigungsvorrichtungen mit ihnen verbunden sind, nicht durch Wärmestrahlung erhitzt werden.

Diese Aufgabe wird erfindungsgemäß dadurch gelöst, daß ein in die heiße Ofenzone hineinragender Bereich der Vorrichtung eine Aufwölbung mit einem Krümmungsbeginn und einem Krümmungsende aufweist, die von einem mit einer Immersionsflüssigkeit gefüllten Gefäß umschlossen ist, wobei im Material der Vorrichtung in einem vor der Aufwölbung liegenden Bereich infolge Totalreflexion geführte Wärmestrahlung aus der Aufwölbung ausgekoppelt und in die Immersionsflüssigkeit eingekoppelt wird und ein an die Aufwölbung anschließender Bereich der Vorrichtung mit an ihm befindlichen weiteren Vorrichtungsteilen kälter als der vor der Aufwölbung liegende Bereich der Vorrichtung ist.

Nach vorteilhaften weiteren Ausgestaltungen der Erfindung ist die Vorrichtung ein Halterungsstab, vorzugsweise mit einem weiteren Vorrichtungsteil in Form einer Befestigungsvorrichtung oder ein Arbeitsrohr, vorzugsweise mit einem weiteren Vorrichtungsteil in Form eines Dichtungsringes.

Nach weiteren vorteilhaften Ausgestaltungen der Erfindung wird eine Immersionsflüssigkeit eingesetzt, die einen Temperaturkoeffizienten des Brechungsindex hat, der ähnlich dem von Quarzglas ist. Vorzugsweise wird als Immersionsflüssigkeit Tetraethylenglykol eingesetzt.

Mit der Vorrichtung gemäß der vorliegenden Erfindung ergibt sich der Vorteil, daß in Vorrichtungsteilen aus Quarzglas geführte Wärmestrahlung auf überraschend einfache Weise aus dem Quarzglas ausgekoppelt werden kann.

Anhand der Zeichnung werden Ausführungsbeispiele der Erfindung beschrieben und in ihrer Wirkungsweise erläutert. Es zeigen:

Fig. 1 Arbeitsrohr gemäß der Erfindung zur Reinigung von Grünkörpern im Schnitt,

Fig. 2 Halterungsstab gemäß der Erfindung zum Sintern von Grünkörpern im Schnitt.

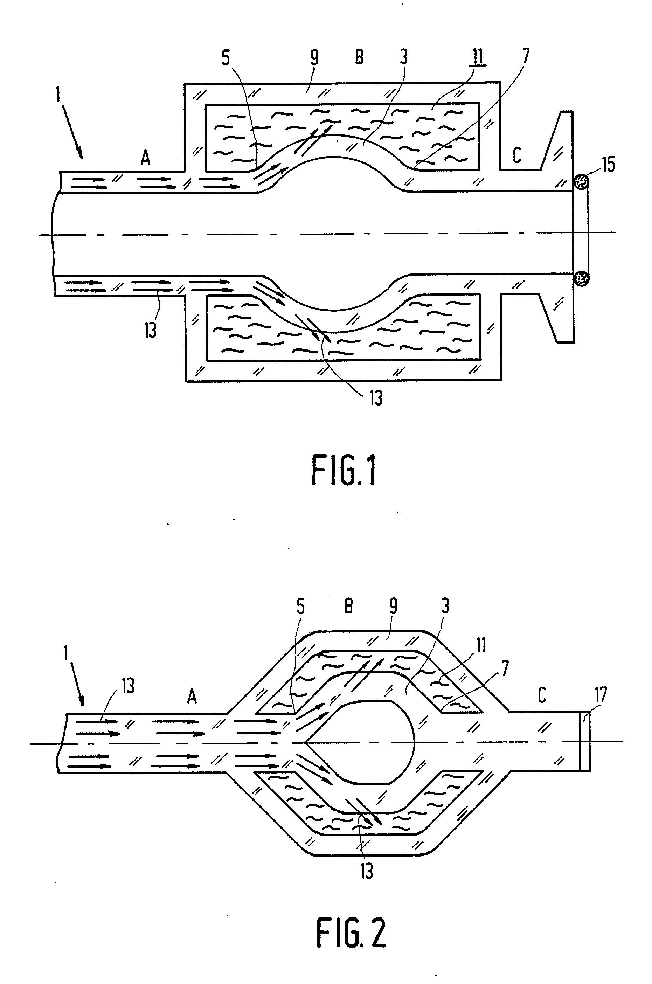

In Figur 1 ist eine Vorrichtung 1 in Form eines Arbeitsrohres aus Quarzglas dargestellt, in welchem ein Grünkörper aus einem keramischen Material (nicht dargestellt) mittels eines Reinigungsgasstromes, z.B. aus einem mit einer Schwefel-Sauerstoff-Halogen-Verbindung gesättigten Trägergas, der das Arbeitsrohr durchströmt, in einem Ofen bei einer Temperatur im Bereich von 200 bis 500 °C gereinigt werden kann. Das Arbeitsrohr befindet sich mit seinem Bereich A in einem nicht dargestellten Ofen. Innerhalb des Materials des Arbeitsrohres vom Bereich A in Richtung auf den Bereich B aufgrund von Totalreflexion geführte Wärmestrahlung 13 wird zunächst innerhalb des Bereiches A aufgrund der guten Transmissioneigenschaften von Quarzglas durch vielfache Totalreflexion innerhalb des Materials des Rohrmantels weitergeleitet. Innerhalb des Bereiches B, in welchem das Arbeitsrohr eine Aufwölbung 3 mit einem Krümmungsbeginn 5 und einem Krümmungsende 7 aufweist, die von einem Gefäß 9 umschlossen ist, in welchem sich eine Immersionsflüssigkeit 11 mit vorzugsweise einem Temperaturkoeffizienten des Brechungsindex, der ähnlich dem von Quarzglas ist, befindet, folgt die innerhalb des Quarzglases im Bereich A geführte Wärmestrahlung 13 zunächst dem Verlauf des Krümmungsbeginns 5. Durch die die Aufwölbung 3 im Bereich B umgebende Immersionsflüssigkeit 11 wird die Wärmestrahlung 13 im Bereich B nicht mehr reflektiert, sondern breitet sich geradlinig aus und tritt in die Immersionsflüssigkeit 11 ein. Spätestens nach dem Krümmungsende 7 ist die Wärmestrahlung 13 aus dem Quarzglas der Aufwölbung 3 ausgekoppelt. Im Bereich C ist das Arbeitsrohr soweit abgekühlt, daß am Ende des Arbeitsrohres angebrachte weitere Vorrichtungsteile,wie z.B. ein Dichtungsring 15, nicht mehr in unerwünschter Weise erhitzt werden.

Ein weiteres Ausführungsbeispiel der erfindungsgemäßen Vorrichtung 1 in Form eines Halterungsstabes aus Quarzglas für zu sinternde keramische Grünkörper mit z.B. einem weiteren Vorrichtungsteil in Form einer Befestigungsvorrichtung 17 ist in Figur 2 dargestellt.

Bei einem Sinterprozeß werden an einem Halterungsstab befestigte Grünkörper, wie sie z.B. für die Herstellung von Vorformen für optische Wellenleiter benötigt werden, mit einer Absenkgeschwindigkeit von z.B. 3 mm/min durch einen auf eine Temperatur von 1500 °C aufgeheizten Ofen geführt. Der in Figur 2 dargestellte Halterungsstab ist in seinem Bereich A massiv und weist in seinem Bereich B eine rohrförmig aufgeweitete Aufwölbung 3 mit einem Krümmungsbeginn 5 und einem Krümmungsende 7 auf, wobei der Halterungsstab im Bereich der Aufwölbung 3 von einem Gefäß 9 umschlossen ist, das mit einer Immersionsflüssigkeit 11 gefüllt ist. Im Bereich C ist der Halterungsstab wiederum massiv. Die Auskopplung von im Quarzglas des Halterungsstabes infolge Totalreflexion von Bereich A in Richtung auf den Bereich B geführter Wärmestrahlung 13 erfolgt in der gleichen Weise, wie sie zum Beispiel gemäß Figur 1 beschrieben wurde. Eine am Ende des Bereiches C an dem Halterungsstab angebrachte Befestigungsvorrichtung 17 wird auf diese Weise ebenfalls nicht in unerwünschter Weise erwärmt.

Eine Vorrichtung, wie sie zu Figur 2 beschrieben wurde, läßt sich nicht nur zum Sintern von keramischen Grünkörpern einsetzen, sondern auch zum Ziehen von aus einem Quarzglaskörper herzustellenden optischen Wellenleiterfasern; bei diesem Ziehprozeß sind noch wesentlich höhere Temperaturen (Ofentemperaturen bis etwa 2000 °C) als zum Sintern von Quarzglaskörpern erforderlich, hier tritt also in erhöhtem Maß das Problem auf, daß sich Befestigungsvorrichtungen in unerwünschter Weise erhitzen.

Das in den Figuren 1 und 2 dargestellte Gefäß 9 zur Aufnahme der Immersionsflüssigkeit 11 wird zweckmäßigerweise ebenfalls aus Quarzglas hergestellt und kann an die Vorrichtung 1 in Form eines Arbeitsrohres oder eines Halterungsstabes angeschmolzen sein. Es ist jedoch auch möglich, ein gesondertes Gefäß über Dichtungsringe an die Vorrichtung anzuflanschen.

Bei Anwendung der erfindungsgemäßen Vorrichtung in Hochtemperaturöfen ist es zweckmäßig, eine zusätzliche Kühlung der Immersionsflüssigkeit vorzusehen, insbesondere dann, wenn diese einen anderen Temperaturkoeffizienten des Brechungsindex aufweist als Quarzglas.

In einem praktischen Ausführungsbeispiel wurde ein Quarzglasrohr einer Länge von 1,80 m, eines Außendurchmessers von 58 mm und einer Wandstärke von 4 mm mit einer Aufwölbung eines Außendurchmessers von 74 mm in einen elektrisch beheizten Widerstandofen einer Länge von 1,50 m und eines inneren Ofendurchmessers von 80 mm eingesetzt. Bei einer Ofentemperatur von 1100 °C zeigte ein am Ende des Quarzglasrohres befindlicher Dichtungsring aus einem Fluorelastomer eine Temperatur von < 50 °C bei erfindungsgemäßer Ausbildung des Quarzglasrohres. Bei Verwendung eines Quarzglasrohres gleicher Abmessungen, jedoch ohne Aufwölbung und Gefäß mit Immersionsflüssigkeit erwärmte sich ein Dichtungsring aus einem Fluorelastomer bei gleicher Ofentemperatur auf eine Temperatur von < 200 °C, was zu einer Zerstörung des Dichtungsringes schon nach kurzer Dauer führte.

**Ansprüche**

1. Vorrichtung aus Quarzglas zur Aufnahme oder zum Halten von in einem Ofen zu erhitzenden Werkstücken,
<u>dadurch gekennzeichnet,</u>
daß ein in die heiße Ofenzone hineinragender Bereich (B) der Vorrichtung (1) eine Aufwölbung (3) mit einem Krümmungsbeginn (5) und einem Krümmungsende (7) aufweist, die von einem mit einer Immersionsflüssigkeit (11) gefüllten Gefäß (9) umschlossen ist, wobei im Material der Vorrichtung in einem vor der Aufwölbung liegenden Bereich (A) infolge Totalreflexion geführte Wärmestrahlung (13) aus der Aufwölbung ausgekoppelt und in die Immersionsflüssigkeit eingekoppelt wird und ein an die Aufwölbung anschließender Bereich (C) der Vorrichtung mit an ihm befindlichen weiteren Vorrichtungsteilen (15,17) kälter als der vor der Aufwölbung liegende Bereich ist.

2. Vorrichtung nach Anspruch 1,
dadurch gekennzeichnet,
daß die Vorrichtung (1) ein Arbeitsrohr ist.

3. Vorrichtung nach Anspruch 2,
dadurch gekennzeichnet,
daß der weitere Vorrichtungsteil ein Dichtungsring (15) ist.

4. Vorrichtung nach Anspruch 1,
dadurch gekennzeichnet,
daß die Vorrichtung (1) ein Halterungsstab ist.

5. Vorrichtung nach Anspruch 4,
dadurch gekennzeichnet,
daß der weitere Vorrichtungsteil eine Befestigungsvorrichtung (17) ist.

6. Vorrichtung nach mindestens einem der Ansprüche 1 bis 5,
dadurch gekennzeichnet,
daß eine Immersionsflüssigkeit (11) eingesetzt wird, die einen Temperaturkoeffizienten des Brechungsindex hat, der ähnlich dem von Quarzglas ist.

7. Vorrichtung nach Anspruch 6,
dadurch gekennzeichnet,
daß als Immersionsflüssigkeit (11) Tetraethylenglykol eingesetzt wird.

FIG.1

FIG.2